Europäisches Patentamt

European Patent Office

Office européen des brevets

(11) Publication number: **0 175 401**
**B1**

(12) EUROPEAN PATENT SPECIFICATION

(45) Date of publication of patent specification: **07.06.89**

(21) Application number: **85201321.8**

(22) Date of filing: **16.08.85**

(51) Int. Cl.⁴: **B 01 D 9/00**

(54) Method for the separation of suspension liquid from solid particles present in suspension and washing of the packed bed of solid particles obtained counter-currently with a washing liquid.

(30) Priority: **17.08.84 NL 8402536**

(43) Date of publication of application:
**26.03.86 Bulletin 86/13**

(45) Publication of the grant of the patent:
**07.06.89 Bulletin 89/23**

(84) Designated Contracting States:
**AT BE CH DE FR GB IT LI LU NL SE**

(56) References cited:
EP-A-0 097 405
FR-A- 973 567
FR-A-2 433 966
US-A-2 813 781
US-A-2 822 249
US-A-3 392 539

(73) Proprietor: **NEDERLANDSE CENTRALE ORGANISATIE VOOR TOEGEPAST-NATUURWETENSCHAPPELIJK ONDERZOEK**
**Juliana van Stolberglaan 148**
**NL-2595 CL The Hague (NL)**

(72) Inventor: **Arkenbout, Gerardus Johannes**
**Montessorilaan 23**
**NL-3706 JB Zeist (NL)**
Inventor: **Schneiders, Leonardus Hubertus J.M.**
**Laan van Vollehove 128**
**NL-3706 AA Zeist (NL)**

(74) Representative: **van der Beek, George Frans et al**
**Nederlandsch Octrooibureau Scheveningseweg 82 P.O. Box 29720**
**NL-2502 LS 's-Gravenhage (NL)**

## Description

The invention relates to a method for the separation of suspension liquid from solid particles present in suspension in a compacting zone by removal of suspension liquid with the formation of a packed bed of solid particles which bed is subjected to a continuous displacement motion, washing the packed bed of solid particles counter-currently with a washing liquid which is a saturated solution of said solid particles in a solvent in a washing zone adjoining the compacting zone and removal of the washed solid particles.

A method of this type is indicated in European patent application 0 097 405, in particular page 6, lines 6—11. However, the major part of said European patent application is based on the separation of crystals from a mother liquor using a melt of a part of the removed crystals as washing liquid. According to this embodiment a so-called "washing front" in the washing zone is obtained at which front a great temperature drop and possibly a colour change along a rather small zone occurs which is easily detectable. If too much washing liquid is dosed this "washing front" moves to the direction of the filters through which the mother liquor is removed and in the case that too little washing liquid is dosed this "washing front" moves to the take-off side of the washed crystals. Therefore the washing liquid supply is preferably controlled in such a way that the "washing front" is located stationary in the washing zone about halfway the filters and the take-off side of the washed crystals. In the specific embodiment of a washing process comprising a saturated solution as a washing liquid instead of a melt the required flow rate of washing liquid resulting in a relatively sharp washing front as obtained in the case of using a melt as washing liquid and assuring the required purity of the final product particles is rather distinct. However, such a distinct flow rate of washing liquid implies a considerable consumption of washing liquid which aspect forms a main cost factor in washing processes.

A similar method of the above defined type is known from Dutch patent application 79.04919. More in particular, this patent application relates to a method for the separation of ice crystals present in a suspension of ice crystals in an aqueous solution from the aqueous solution and for the washing of the ice crystals with an aqueous washing liquid obtained by melting ice crystals, a compacted bed of ice crystals being formed which is subjected to a continuous displacement motion, while a washing front is formed within the compacted bed of ice crystals between the aqueous solution and the aqueous washing liquid. The method according to this Dutch patent application is characterised in that because the aqueous solution and the aqueous washing liquid adjacent to the washing front are substantially held stationary and situated in a flat plane perpendicular to the displacement motion of the compacted bed of ice crystals, a stable washing front is formed. As a result of this establishment of a stationary washing front, a number of disadvantages which are known from the state of the art can be avoided, such as in particular the freezing up of the opening in the column which is used for the removal of the aqueous solution from the column and usually provided with a sieve gauze. Specifically, this disadvantage occurs if the washing liquid can reach the abovementioned opening for removing the aqueous solution which is provided with a sieve gauze, for example by means of channel formation in the compacted bed of crystals. More particularly, the method according to this Dutch Patent Application 79.04919 is carried out by making use of the following steps:

a) the suspension is continuously fed into a first cylindrical zone,

b) in this first cylindrical zone a part of the aqueous solution is continuously removed from the suspension with the formation of a compacted bed of ice crystals,

c) the compacted bed of ice crystals is continuously moved through a second cylindrical zone which contains a stationary layer of aqueous solution in a first section and a substantially stationary layer of washing liquid in a second section adjacent to the first section with the formation of a washing front between the first and second sections, and

d) the continuously advancing compacted bed is continuously disintegrated, after which the product of the disintegration is removed.

On closer consideration of the method according to the above-named Dutch Patent Application 79.04919 it is evident that the washing liquid used is obtained by the melting of the transported crystals, in this case the final product.

More particularly in this method all the crystals removed are melted; a part of the melt is fed back as washing liquid and the remainder is removed as liquid product.

From the U.S. Patent 2,981,773 a method is known for the separation of a component from a liquid solution thereof, in which this solution is fed through a cooling zone in order to allow a part of the solution to crystallise out. The mixture of crystals and uncrystallised liquid or mother liquor obtained is fed into a zone from which the mother liquor is removed through a removal opening provided with a filter and a compacted bed of crystals is left behind. The compact bed of crystals is transported further and then finally reaches a melting zone in which the crystals are melted. In this process a part of the melt flows in the opposite direction as a washing liquid through at least part of the crystal mass, as a result of which the impurities included in the crystal mass are removed before they reach the melting zone. In this way the melt, used as washing liquid, increases the purity of the final product. Because the temperature of the washing liquid, which consists of a pure melt, is higher than the temperature of the packed bed of crystals from which the mother liquor has largely been removed, the washing liquid will again crystallise out as a result of a decrease in the temperature. In such a method it is important that the washing front, ie. the point at which the temperature and concentration gradients are maximum, which is produced as a matter of course is preferably located halfway between the melting zone and the removal device for the mother liquor. The reason for this is that if the washing front were located at or in the neighbourhood of the removal device for the mother liquor, the latter could become blocked up by the growth of crystals as a result of the washing liquid (pure melt) crystallising out on the cold filters.

As is evident from the above, in this case the washing liquid also consists of molten crystals of the final product.

Moreover, from American Patent 2,862,797 a device is known for the separation and purification of crystals from a suspension of crystals in which these crystals, after separation of the mother liquor, are washed counter-currently with a melt of these crystals as washing liquid. According to the method described in this U.S. Patent 2,862,797, the mother liquor is removed by filters in the wall of the column. Just as in the case of the two literature references discussed above, in this last-named method also a washing liquid is used which is obtained by melting of the washed crystals.

U.S. Patent 2,813,781 describes a method in which a packed bed of xylene crystals is washed with a suitable hydrocarbon such as toluene. This hydrocarbon displaces the mother liquor present in the packed bed while also dissolving a part of the crystals. The disadvantage of this is that dissolution of crystals results in the formation of liquid channels in the packed bed, as a result of which a uniform distribution of the washing liquid over the bed is disturbed and the quantity of washing liquid needed increases.

From the above it is evident that the controlling of the flow rate of the washing liquid especially in the case of a saturated solution as washing liquid is important with respect to the washing liquid consumption. It has now been found that if the flow rate of the washing liquid is regulated on the basis of suspension liquid breakthrough in the washing zone it is possible to achieve a high washing efficiency with a minimum of washing liquid consumption.

The invention therefore relates to a method of the type mentioned in the introduction, which method is characterised in that the flow rate of the washing liquid is regulated on the basis of the suspension liquid breakthrough in the washing zone, said flow rate being adjusted in order to prevent such breakthrough.

By a saturated solution is meant a solution which is saturated at the temperature which prevails in the packed bed at the point where the washed crystals are removed.

More particularly, in this connection stress is laid on the fact that the method according to the invention represents a breakthrough in the matter of the washing of crystals by means of the method referred to in the introduction in view of the fact that all kinds of crystals formed from solutions, in particular inorganic crystals such as sodium chloride and soda, but also organic crystals such as ascorbic acid, adipic acid and the like, can now be washed with all kinds of washing liquids, which are saturated solutions of these crystals. The solid particles removed are now not melted, but removed as a suspension.

Because the washing liquid is fed in the opposite direction to the crystals to be washed, this washing liquid can be removed via the same removal device as is used for the removal of the mother liquor or the suspension liquid. The problems which arise according to the state of the art discussed above in the removal of the washing liquid of molten crystals through the devices for removal of the mother liquor, such as crystallising out of the liquid on the filter, as a result of which blockages occur, do not occur in the method according to the invention since there is now no question of oversaturation of the washing liquid.

In order to obtain a good flow profile for both the washing liquid and the mother liquor, these two liquids are preferably removed via one or more filters uniformly distributed over the interface of the compacting zone and the washing zone.

Moreover, the suspension present in the inlet zone can be stirred in order to obtain a uniform structure of the compacted bed of solid particles in which channel formation by the washing liquid is avoided.

More particularly the method according to the invention can be implemented if in sequence

a) the suspension is continuously fed into a cylindrical compacting zone and subjected to a stirring action,

b) in the cylindrical compacting zone substantially the total quantity of suspension liquid is continuously removed from the suspension with the formation of a compacted bed of solid particles,

c) the compacted bed of solid particles is caused to move continuously through a cylindrical washing zone adjoining the cylindrical compacting zone through which washing zone a washing liquid is fed in the opposite direction to the compacted bed of solid particles and

d) the advancing compacted bed is then continuously disintegrated and the product of the disintegration removed.

Preferably, the method according to the invention is applied to a mother liquor containing crystals.

A characteristic aspect of the method according to the invention is that the washing front which arises between the filters and the crystal removal side is not sharp but diffuse, which front extends from the filters in the direction of the removal side. The washing front becomes more diffuse as less washing liquid is supplied. The flow rate of the washing liquid is constant over the whole length of the washing zone. This is in contrast to the known methods in which molten crystals are used as washing liquid.

One of the advantages of the new method is that a high washing efficiency can be achieved with a minimum quantity of washing liquid. To this end just enough washing liquid is metered in to prevent an unacceptable breakthrough of mother liquid to the removal side.

The product stream is therefore analysed and the result of this analysis is used as a basis for the regulation of the size of the current of washing liquid.

A high washing efficiency with a minimum quantity of washing liquid can with advantage be obtained if a homogeneous compacting of the suspension and a homogeneous flow through the bed formed is achieved.

In order to achieve a homogeneous particle size distribution over the whole cross-section of the column with large differences in the densities of the solid particles and liquid, such as in the case of NaCl and brine, and with a large spread in particle size, and also with large column diameters (e.g. 1.5 m), use is preferably made of a certain type of stirring mechanism in the suspension supply side in order to achieve a uniform and homogeneous structure of the compacted bed of solid particles in the radial direction. It has turned out that a well-dimensioned churn-type stirrer, i.e. a plate containing holes which can be moved up and down, with a suitably chosen stroke and frequency performs well as stirrer in the compacting of suspensions of inorganic salts.

To obtain a homogeneous flow through the packed bed the washing liquid is supplied at a washing pressure adjusted in a manner such that no pressure variations or pressure fluctuations occur as a function of the position in a cross-section of the column.

The removal of the disintegrated bed without undesirable pressure fluctuations requires some care in the case of columns with large diameters. A suitably dimensioned blade stirrer in conjunction with suitably chosen deflectors turns out to be capable, in the case of large differences in density, such as in the case of inorganic salts, of suspending the crystals removed in the desired manner without undesirable disturbances occurring in the supply of washing liquid.

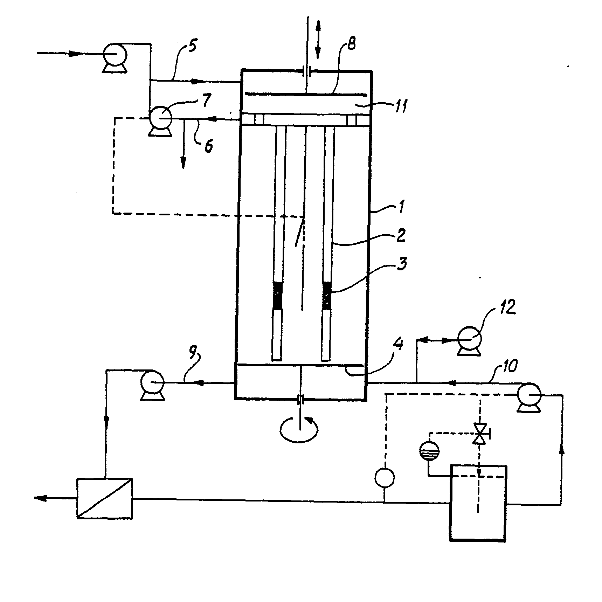

The method according to the invention can be carried out by means of the device shown in the figure.

The device in the figure consists of a hollow cylindrical body 1 containing one or more tubes 2, each of which is provided with a filter 3. The tubes are fitted in a stationary manner in the cylinder and distributed uniformly over its internal cross-section. As the underside the device is provided with means for the disintegration of the compacted bed removed, namely a rotating knife 4. At the upper side a pipe 5 is present for supplying suspension, which pipe 5 debouches into a chamber 11, from which the suspension is fed uniformly distributed over the cross-section into the cylinder 1. The suspension liquid removed is removed via pipe 6. The transport speed and the bed length can be controlled by means of pump 7. The chamber 11 is provided with a stirring device, for example a churn-type stirrer 8, in order to obtain a uniform structure (homogeneous distribution of the particle size of the solid particles over the cross-section of the cylinder) of the compacted bed of the solid particles to be formed later. Moreover, the washing liquid is fed in via pipe 10 and the crystal mass is removed via line 9. The washing liquid is fed in a manner such that no pressure fluctuations occur in the column as a function of the position in the cross-section of the column. Just enough washing liquid is fed in to prevent any undesired breakthrough of mother liquor.

The wall friction in the filters 3 can be reduced by generating a pulsating liquid flow by means of pump 12.

Example I

NaCl crystals were fed in a quantity of 60 kg/h into a washing column having a diameter of 60 mm in which a filter tube was fitted. Lithium chloride was added to the feed suspension and ethanol to the washing liquid. By determining lithium and ethanol contents it is possible to check how much mother liquor was removed with the crystals and how much washing liquid was consumed. By means of the method according to the invention it was possible to remove 99% of the mother liquor using only 2 litres of washing liquid per 100 kg of sodium chloride crystals. The washing liquid used was a saturated solution of pure NaCl crystals in water. The washed crystals obtained may, if desired, also be treated by means of, for example, a centrifuge or filter if a separation between the solid particles and the liquid is desired.

In view of the above figures it may be inferred that in the method according to the invention a very high washing efficiency can be achieved with a minimum quantity of washing liquid.

Example II

Corresponding results were obtained for the washing of salt crystals with a column having a diameter of 300 mm. The capacity was 1000 kg of salt crystals per hour. In total the washing column consisted of a suspension supply chamber, a compacting and washing section and a suspension removal chamber. The suspension supply chamber was provided with a churn-type stirrer. The churn-type stirrer plate contained openings of 25 mm. The open surface was approx. 20%. The stroke length of the stirrer was 200 mm and the frequency 1 stroke per second.

The compacting and washing section contained 19 filter pipes having a diameter of 30 mm. Each pipe was provided with a filter made of electrolytically perforated nickel with openings of 0.1 mm. The length of the filters was 40 mm.

Between the washing zone and the suspension removal chamber there was fitted a perforated rotating disc with slot-shaped openings to which knives are attached. Coupled to this was a stirrer with 4 blades which extended to the wall of the chamber for bringing the crystals to be removed into suspension. The speed of rotation of knife and blade stirrer was 1 per second.

The average particle size of the washed crystals was 0.5 mm.

The particle size distribution was as follows:

| Size | Percentage by weight |
|---|---|
| 0.18 mm | 5.5 |
| 0.18—0.355 | 30.5 |
| 0.355—0.5 | 37.7 |
| 0.5—0.7 | 21.4 |
| 0.7—1 | 4.9 |

The density of the salt crystals was 2,165 kg/m$^3$ and that of the brine solution was 1,170 kg/m$^3$.

The rate of flow of the washing liquid was adjusted by means of· the pump which also catered for supplying the liquid needed for suspending. By varying the speed of the pump the rate of flow of the washing liquid can be accurately adjusted.

The quantity of mother liquor which was removed together with the crystals to the suspension removal chamber, was found to decrease as the rate of flow of the washing liquid increased.

A washing efficiency of approx. 99% was achieved with a washing liquid consumption of 20 l per metric ton.

The new method can therefore also be used with success on a larger scale if the process conditions are suitably adjusted.

## Claims

1. A method for the separation of suspension liquid from solid particles present in suspension in a compacting zone by removal of the suspension liquid with the formation of a packed bed of solid particles which bed is subjected to a continuous displacement motion, washing the packed bed of solid particles countercurrently with a washing liquid which is a saturated solution of said solid particles in a solvent in a washing zone adjoining the compacting zone and removal of the washed solid particles, characterized in that the flow rate of the washing liquid is regulated on the basis of the suspension liquid breakthrough in the washing zone, said flow rate being adjusted in order to prevent such breakthrough.

2. Method according to claim 1, characterized in that the suspension is kept homogeneous in the radial direction by an axial movement at the suspension supply side.

3. A method according to claims 1 and 2, characterized in that in sequence

a) the suspension is continuously fed into a cylindrical compacting zone and subjected to an axial stirring action;

b) in this cylindrical compacting zone substantially the total quantity of suspension liquid is continuously removed from the suspension with the formation of a packed bed of solid particles;

c) the packed bed of solid particles is caused to move continuously through a cylindrical washing zone adjoining the cylindrical compacting zone, through which washing zone a washing liquid is fed in the opposite direction to the packed bed of solid particles;

d) the advancing packed bed is then continuously disintegrated and the product of disintegration removed.

## Patentansprüche

1. Verfahren zum Trennen einer Suspensionsflüssigkeit von in der Suspension enthaltenen festen Teilchen in einer Verdichtungszone durch Entfernen der Suspensionsflüssigkeit unter Bildung eines Festbettes aus festen Teilchen, dás einer kontinuierlichen Verschiebebewegung ausgesetzt wird, wobei das Festbett aus festen Teilchen in einer an die Verfestigungszone anschließenden Waschzone im Gegenstrom mit einer Waschflüssigkeit gewaschen wird, die eine gesättigte Lösung der festen Teilchen in einer Lösung ist, und Entfernen der gewaschenen festen Teilchen, dadurch gekennzeichnet, daß die Fließgeschwindigkeit der Waschflüssigkeit reguliert wird auf der Basis des Durchbruches der Suspensionsflüssigkeit in die Waschzone, wobei die Fließgeschwindigkeit so eingestellt wird, daß der Durchbruch vermieden wird.

2. Verfahren nach Anspruch 1, dadurch gekennzeichnet, daß die Suspension durch eine axiale Bewegung an der Suspensions-Zufuhrseite in radialer Richtung homogen gehalten wird.

3. Verfahren nach Anspruch 1 und 2, dadurch gekennzeichnet, daß aufeinanderfolgend

a) die Suspension kontinuierlich in eine zylindrische Verdichtungszone geleitet wird und einer axialen Rührbewegung ausgesetzt wird,

b) in dieser zylindrischen Verdichtungszone im wesentlichen die gesamte Menge der Suspensionsflüssigkeit kontinuierlich aus der Suspension entfernt wird unter Bildung eines Festbetts aus festen Teilchen,

c) das Festbett aus festen Teilchen kontinuierlich durch eine sich an die zylindrische Verdichtungszone anschließende zylindrische Waschzone bewegt wird, wobei durch die Waschzone in entgegengesetzter Richtung zu dem Festbett aus festen Teilchen eine Waschflüssigkeit geleitet wird, und

d) das voranschreitende Festbett dann kontinuierlich zerkleinert wird und das Zerkleinerungsprodukt entfernt wird.

## Revendications

1. Procédé pour la séparation du liquide de suspension de particules solides présentes en suspension dans une zone de compactage par enlèvement du liquide de suspension, avec la formation d'un lit tassé de particules solides, le lit étant soumis à un mouvement continu de déplacement, lavage du lit tassé de particules solides à contre-courant avec un liquide de lavage qui est une solution saturée desdites particules solides dans un solvant, dans une zone voisine de la zone de tassement, et enlèvement des particules solides lavées, caractérisé par le fait que le débit d'écoulement du liquide de lavage est régulé sur la base du passage de la suspension liquide à travers la zone de lavage, ledit débit d'écoulement étant ajusté de façon à prévenir une telle traversée.

2. Procédé selon la revendication 1, caractérisé par le fait que la suspension est maintenue homogène dans la direction radiale par un mouvement axial du côté de l'alimentation en liquide de suspension.

3. Procédé selon les revendications 1 et 2, caractérisé par le fait que, d'une façon séquentielle:

a) la suspension est continuellement introduite dans une zone cylindrique de compactage, et soumise à une action d'agitation axiale;

b) dans cette zone cylindrique de compactage, sensiblement toute la quantité de suspension liquide est enlevée de façon continue de la suspension, avec la formation d'un lit tassé de particules solides;

c) le lit tassé de particules solides est amené à se déplacer continuellement à travers une zone cylindrique de lavage avoisinant la zone cylindrique de compactage, la zone de lavage étant traversée par un liquide de lavage introduit dans la direction opposée jusqu'au lit tassé de particules solides;

d) le lit de tassement qui se déplace est alors désintégré de façon continue, et le produit de désintégration est enlevé.